# EUROPEAN PATENT APPLICATION

(11) **EP 4 438 978 A1**
(43) Date of publication of application: **02.10.2024**
(21) Application number: 22898373.0
(22) Date of filing: 04.11.2022
(51) Int. Cl.: F25B 15/00

(54) **ABSORBER UNIT, HEAT EXCHANGE UNIT, AND ABSORPTION REFRIGERATOR**

(30) Priority: 26.11.2021 JP 2021191785
(71) Applicant: Panasonic Intellectual Property Management Co., Ltd., Kadoma-shi, Osaka 571-0057 (JP)
(72) Inventor: SUN, Hongzhi, Kadoma-shi, Osaka 571-0057 (JP); KAWANO, Bunki, Kadoma-shi, Osaka 571-0057 (JP); SHIMODAHIRA, Nobukazu, Kadoma-shi, Osaka 571-0057 (JP); MATSUI, Masaru, Kadoma-shi, Osaka 571-0057 (JP)
(74) Representative: Eisenführ Speiser
(86) International application number: PCT/JP2022/041154
(87) International publication number: WO 2023/095589

(57) **Abstract**

An absorber unit 1a includes a first heat transfer tube group 12a including a plurality of heat transfer tubes, a first drip feed 13a, a second heat transfer tube group 12b, a second drip feed 13b, a partition 14, and a supply path 15. The second drip feed 13b is capable of dripping, toward the second heat transfer tube group 12b, the absorbent liquid having been dripped from the first drip feed 13a and flown down an outer surface of the heat transfer tube of the first heat transfer tube group 12a. The supply path 15 is provided to the partition 14, and is capable of leading, into the second drip feed 13b, the absorbent liquid having flown down the outer surface of the heat transfer tube of the first heat transfer tube group 12a. The supply path 15 includes an inlet 15a and an outlet 15b disposed below the inlet 15a in the gravity direction. The supply path 15 includes an upstream portion 15c in which the absorbent liquid is led from the inlet 15a with gravity and a downstream portion 15d in which the absorbent liquid having passed through the upstream portion 15c is led toward the outlet 15b against gravity.

## Description

### TECHNICAL FIELD

The present invention relates to an absorber unit, a heat exchange unit, and an absorption refrigerator.

### BACKGROUND ART

Patent Literature 1 describes a multistage evaporation-absorption type absorption chiller-heater. This absorption chiller-heater includes an evaporator and an absorber each including multiple stages vertically arranged using a partition wall. The partition wall is provided with a refrigerant redistributor for containing a refrigerant and a solution redistributor for containing a solution. A bottom portion of the refrigerant redistributor is provided with a lot of drip holes for leading the refrigerant to a lower section of the evaporator. A bottom portion of the solution redistributor is provided with a lot of drip holes for leading the solution to a lower section of the absorber.

### CITATION LIST

### Patent Literature

Patent Literature 1: JP 2000-179975 A

### SUMMARY OF INVENTION

### Technical Problem

The present disclosure provides an absorber unit capable of making an absorbent liquid absorb a vapor-phase refrigerant in a plurality of stages, the absorber unit being advantageous in that mixing of the absorbent liquid into a liquid-phase refrigerant and consequent deterioration in refrigeration capacity are prevented.

### Solution to Problem

An absorber unit of the present disclosure includes:
a first heat transfer tube group including a plurality of heat transfer tubes;
a first drip feed capable of dripping an absorbent liquid toward the first heat transfer tube group;
a second heat transfer tube group disposed below the first heat transfer tube group in a gravity direction;
a second drip feed capable of dripping, toward the second heat transfer tube group, the absorbent liquid having been dripped from the first drip feed and flown down an outer surface of the heat transfer tube of the first heat transfer tube group;
a partition separating a first space in which the first heat transfer tube group is disposed and a second space in which the second heat transfer tube group is disposed; and
a supply path provided to the partition, the supply path being capable of leading, into the second drip feed, the absorbent liquid having flown down the outer surface of the heat transfer tube of the first heat transfer tube group, wherein
the supply path includes: an inlet in contact with the first space; an outlet disposed below the inlet in the gravity direction, the outlet being in contact with the second space; an upstream portion in which the absorbent liquid is led from the inlet with gravity; and a downstream portion in which the absorbent liquid having passed through the upstream portion is led toward the outlet against gravity.

### Advantageous Effects of Invention

In the absorber unit of the present disclosure, the absorbent liquid is led from the inlet of the supply path into the upstream portion with gravity to pass through the upstream portion, and is then led toward the outlet of the supply path against gravity in the downstream portion. Therefore, the absorbent liquid tends to form a liquid seal in the supply path. This makes it less likely that a vapor-phase refrigerant in the second space is led into the first space and that the mist of the absorbent liquid in the first space spreads to the outside of the absorber unit. Consequently, mixing of the absorbent liquid into a liquid-phase refrigerant and consequent deterioration in refrigeration capacity are likely to be prevented.

### BRIEF DESCRIPTION OF DRAWINGS

FIG. 1 shows a heat exchange unit according to Embodiment 1.
FIG. 2 shows a supply path and a second drip feed according to Embodiment 1.
FIG. 3 shows the supply path according to Embodiment 1.
FIG. 4 shows an absorber unit according to Embodiment 2.
FIG. 5 shows an absorber unit according to Embodiment 3.
FIG. 6 shows an absorber unit according to Embodiment 4.
FIG. 7 shows an absorption refrigerator according to Embodiment 5.

### DESCRIPTION OF EMBODIMENTS

### (Findings on which the present disclosure is based, etc.)

At the time when the present inventors conceived of the present disclosure, it was known that, as for a multistage evaporation-absorption type absorption refrigerator including an evaporator and an absorber each including multiple stages, a large difference between the solute concentrations in a high concentration absorbent liquid and a low concentration absorbent liquid improves the coefficient of performance (COP). When the difference between the solute concentrations in the high concentration absorbent liquid and the low concentration absorbent liquid is large, the amount of the absorbent liquid circulating can be reduced to increase the temperature efficiency in the absorber. Consequently, the COP can be improved.

In this technical field, it is common that a liquid seal is formed using the head of a liquid-phase refrigerant in a liquid-phase refrigerant supplier and the head of an absorbent liquid in an absorbent liquid supplier so as to maintain a difference between the pressures in the high-pressure stage and the low-pressure stage. Under such a circumstance, the present inventors got an idea of using an increase in capacity to reduce the heat transfer area for size reduction of an absorber, the increase being achieved by enlarging the difference between the concentrations of a high concentration absorbent liquid and a low concentration absorbent liquid. To embody the idea, the present inventors focused on the fact that the head of the absorbent liquid required in the absorbent liquid supplier depends on the head of the absorbent liquid for maintaining the difference between the pressures in the high-pressure stage and the low-pressure stage and the head of the absorbent liquid for dripping the absorbent liquid from the supplier. However, the liquid level of the absorbent liquid in the absorbent liquid supplier can fluctuate as the absorbent liquid flows down.

During rated operation, the difference between the pressures in the high-pressure stage and the low-pressure stage is large, and the flow rate of the absorbent liquid is high. This contributes to a high head of the absorbent liquid in the absorbent liquid supplier. Therefore, regardless of fluctuation of the liquid level of the absorbent liquid in the absorbent liquid supplier, a liquid seal is formed in a hole configured to drip the absorbent liquid in the absorbent liquid supplier. As a result, a high-pressure vapor-phase refrigerant is less likely to move from the high-pressure stage into the low-pressure stage. On the other hand, during low load operation, the difference between the pressures in the high-pressure stage and the low-pressure stage is small, and the flow rate of the absorbent liquid is low. Hence, the head of the absorbent liquid in the absorbent liquid supplier decreases. This decrease can result in fluctuation of the liquid level of the absorbent liquid in the absorbent liquid supplier. The fluctuation can locally cause a lack of the absorbent liquid, resulting in failure in liquid seal formation. Consequently, the high-pressure vapor-phase refrigerant can move from the high-pressure stage into the low-pressure stage, and the mist of the absorbent liquid in the low-pressure stage can spread toward the low-pressure evaporator. This can be a disadvantage in that mixing of the spread absorbent liquid into a liquid-phase refrigerant results in a decrease of the vapor pressure of the refrigerant and an increase of the saturation concentration of the low concentration absorbent liquid and thus the amount of the vapor-phase refrigerant that is absorbable decreases to deteriorate the refrigeration capacity. To eliminate this disadvantage, the present inventors have configured the subject matter of the present disclosure.

The present disclosure provides an absorber unit capable of making an absorbent liquid absorb a vapor-phase refrigerant in a plurality of stages, the absorber unit being advantageous in that mixing of the absorbent liquid into a liquid-phase refrigerant and consequent deterioration in refrigeration capacity are prevented.

Embodiments will be described hereinafter in detail with reference to the drawings. Unnecessarily detailed descriptions may be omitted. For example, detailed descriptions of well-known matters and repeated descriptions of substantially the same components may be omitted. This is for avoiding unnecessary redundancy of the following description and for helping persons skilled in the art easily understand the description. Note that the accompanying drawings and the following description are provided for those skilled in the art to fully understand the present disclosure, and thus are not intended to limit the subject matter recited in the claims to these.

### (Embodiment 1)

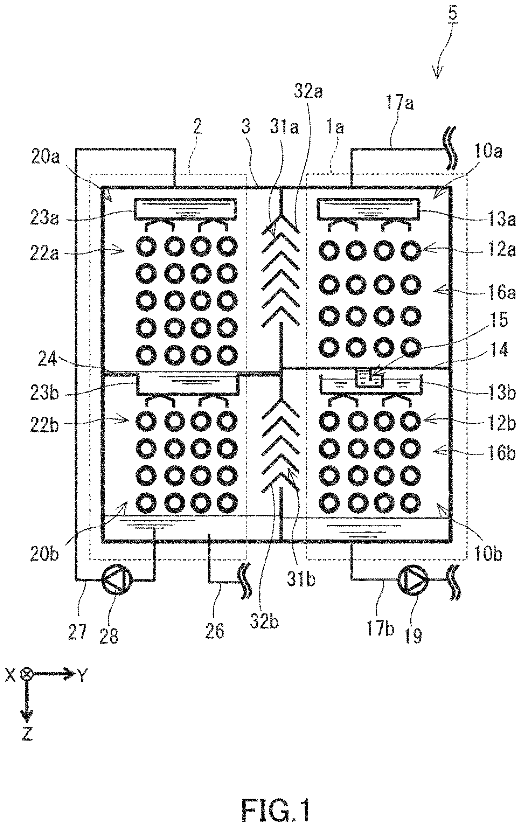

Embodiment 1 will be described hereinafter with reference to FIG. 1, FIG. 2, and FIG. 3. In the accompanying drawings, the Z-axis positive direction is the gravity direction, and the X-axis, the Y-axis, and the Z-axis are orthogonal to each other.

### [1-1. Configuration]

FIG. 1 is a schematic view of a heat exchange unit 5 according to Embodiment 1. In FIG. 1, the heat exchange unit 5 includes an absorber unit 1a, an evaporator unit 2, a first vapor flow path 31a, and a second vapor flow path 31b. The evaporator unit 2 is capable of generating a vapor-phase refrigerant. The absorber unit 1a is capable of absorbing the vapor-phase refrigerant generated in the evaporator unit 2. The first vapor flow path 31a and the second vapor flow path 31b are capable of leading the vapor-phase refrigerant generated in the evaporator unit 2 to the absorber unit 1a.

The absorber unit 1a includes a first heat transfer tube group 12a, a first drip feed 13a, a second heat transfer tube group 12b, a second drip feed 13b, and a partition 14. The first drip feed 13a is capable of dripping an absorbent liquid toward the first heat transfer tube group 12a. The second heat transfer tube group 12b is disposed below the first heat transfer tube group 12a in the gravity direction. The first heat transfer tube group 12a includes a flow path of a heat medium such as water inside a heat transfer tube. The second heat transfer tube group 12b includes a flow path of a heat medium such as water inside a heat transfer tube. The first heat transfer tube group 12a and the second heat transfer tube group 12b each include, for example, a plurality of heat transfer tubes arranged in rows and columns. The second drip feed 13b is capable of dripping, toward the second heat transfer tube group 12b, the absorbent liquid having been dripped from the first drip feed 13a and flown down an outer surface of the heat transfer tube of the first heat transfer tube group 12a. The partition 14 separates a first space 16a in which the first heat transfer tube group 12a is disposed and a second space 16b in which the second heat transfer tube group 12b is disposed. The term "space" as used herein does not mean a substance-free vacuum region but means a place which contains substances and where a phenomenon occurs. The absorber unit 1a includes a first absorber 10a above the partition 14 in the gravity direction and a second absorber 10b below the partition 14 in the gravity direction, the first absorber 10a including the first heat transfer tube group 12a and the first drip feed 13a, the second absorber 10b including the second heat transfer tube group 12b and the second drip feed 13b.

For example, in the absorber unit 1a, the absorbent liquid is supplied to the first absorber 10a and flows down the outer surface of the heat transfer tube of the first heat transfer tube group 12a. Then, the absorbent liquid is supplied to the second absorber 10b, flows down an outer surface of the heat transfer tube of the second heat transfer tube group 12b, and is discharged to the outside of the absorber unit 1a.

The first absorber 10a and the second absorber 10b of the absorber unit 1a are each a shell-and-tube heat exchanger. The method for supplying the absorbent liquid can be, for example, a sprinkling method.

The first drip feed 13a drips the absorbent liquid toward the first heat transfer tube group 12a. The first drip feed 13a includes, for example, a tray for storing the absorbent liquid, and drips the absorbent liquid stored in the tray toward the first heat transfer tube group 12a.

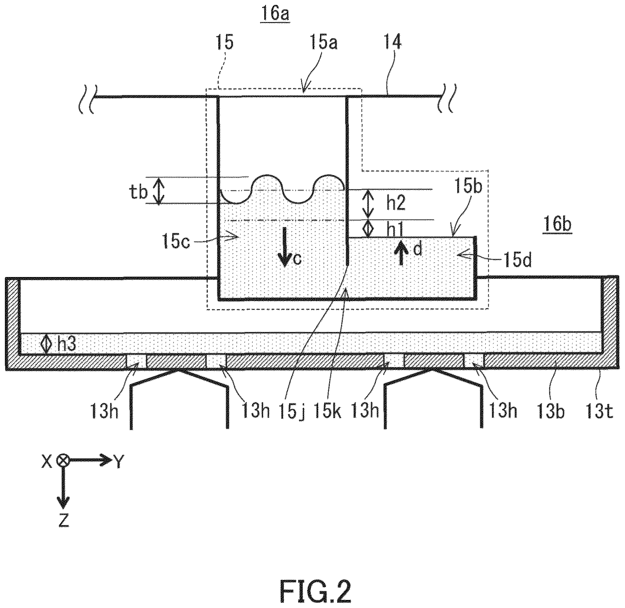

FIG. 2 is a schematic view of a supply path 15 and the second drip feed 13b of the absorber unit 1a. As shown in FIG. 2, the second drip feed 13b includes, for example, a tray 13t for storing the absorbent liquid, and drips the absorbent liquid stored in the tray 13t toward the second heat transfer tube group 12b. A hole 13h is arranged in a bottom portion of the tray 13t. The absorbent liquid stored in the tray 13t is dripped toward the second heat transfer tube group 12b through the hole 13h.

The first drip feed 13a and the second drip feed 13b are each produced, for example, by pressing and welding a stainless steel plate.

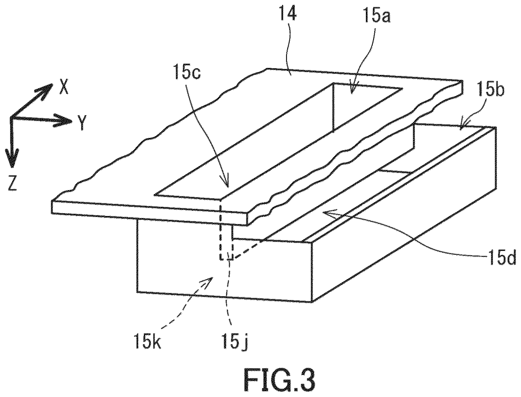

As shown in FIG. 1, the supply path 15 is provided to the partition 14. The supply path 15 is capable of leading, into the second drip feed 13b, the absorbent liquid having flown down the outer surface of the heat transfer tube of the first heat transfer tube group 12a. FIG. 3 is a perspective view of a portion of the partition 14, the portion forming the supply path 15.

As shown in FIGS. 2 and 3, the supply path 15 includes an inlet 15a, an outlet 15b, an upstream portion 15c, and a downstream portion 15d. The inlet 15a is in contact with the first space 16a. The outlet 15b is disposed below the inlet 15a in the gravity direction. The outlet 15b is in contact with the second space 16b. As indicated by an arrow c in FIG. 2, in the upstream portion 15c, the absorbent liquid is led from the inlet 15a with gravity. On the other hand, as indicated by an arrow d in FIG. 2, in the downstream portion 15d, the absorbent liquid having passed through the upstream portion 15c is led toward the outlet 15b against gravity. The downstream portion 15d is positioned, for example, below the outlet 15b in the gravity direction.

The supply path 15 is surrounded, for example, by a portion of the partition 14. The supply path 15 is configured in this manner so as to prevent the absorbent liquid from leaking from the supply path 15. The supply path 15 can be formed by pressing a plate to be the partition 14. The supply path 15 may be integrated with the partition 14 by joining a portion of the partition 14 with the other portion of the partition 14 by welding, the portion being configured to form the supply path 15.

As shown in FIG. 2, the inlet 15a of the supply path 15 is in contact with, for example, a lowest portion of the first space 16a in the gravity direction. The outlet 15b of the supply path 15 is in contact with, for example, the second space 16b above the second drip feed 13b in the gravity direction. When seen in plan view from the first space 16a, the outlet 15b overlaps a portion of the tray 13t.

As shown in FIG. 2, the supply path 15 is in contact with, for example, a partition wall 15j positioned between the upstream portion 15c and the downstream portion 15d in a direction perpendicular to the gravity direction. The supply path 15 includes, for example, a communication portion 15k allowing communication between the upstream portion 15c and the downstream portion 15d. The communication portion 15k is positioned, for example, directly under the partition wall 15j. The communication portion 15k is positioned, for example, below the inlet 15a and the outlet 15b in the gravity direction. The supply path 15 may be a U-shaped flow path.

As shown in FIG. 1, the evaporator unit 2 includes a first evaporator 20a and a second evaporator 20b. The second evaporator 20b is capable of generating a vapor-phase refrigerant at a pressure higher than a pressure in the first evaporator 20a. In the gravity direction, the first evaporator 20a is disposed in an upper stage and the second evaporator 20b is disposed in a lower stage. The first vapor flow path 31a is capable of leading a vapor-phase refrigerant generated in the first evaporator 20a to the first space 16a. The second vapor flow path 31b is capable of leading the vapor-phase refrigerant generated in the second evaporator 20b to the second space 16b. The members forming the first vapor flow path 31a and the second vapor flow path 31b are each made of a material including a metal, such as iron, having thermal insulation properties and pressure resistance.

The evaporator unit 2 includes a partition 24, and the partition 24 separates the first evaporator 20a and the second evaporator 20b. The first evaporator 20a includes a third heat transfer tube group 22a and a first supplier 23a. The second evaporator 20b includes a fourth heat transfer tube group 22b and a second supplier 23b. The third heat transfer tube group 22a and the fourth heat transfer tube group 22b each include, for example, a plurality of heat transfer tubes arranged in rows and columns.

The heat transfer tubes of each of the first heat transfer tube group 12a, the second heat transfer tube group 12b, the third heat transfer tube group 22a, and the fourth heat transfer tube group 22b are disposed, for example, parallel to each other in rows in the gravity direction. The heat transfer tubes of each of the first heat transfer tube group 12a, the second heat transfer tube group 12b, the third heat transfer tube group 22a, and the fourth heat transfer tube group 22b are disposed, for example, to form a square lattice on a plane (ZY plane) perpendicular to a longitudinal direction (X-axis direction) of the heat transfer tube. The heat transfer tubes may be disposed to form a rectangular lattice or a parallelogram lattice on the above plane. The heat transfer tube is, for example, a copper or stainless steel tube. The heat transfer tube may have a groove on an inner surface or the outer surface thereof. The heat transfer tubes may be disposed to form an irregular square lattice, an irregular rectangular lattice, or an irregular parallelogram lattice on the plane (ZY plane) perpendicular to the longitudinal direction (X-axis direction) of the heat transfer tube.

The first evaporator 20a and the second evaporator 20b of the evaporator unit 2 are each, for example, a shell-and-tube heat exchanger. For example, in the case of using a refrigerant, such as water, whose saturated vapor pressure at ordinary temperature (20°C±15°C) is a negative pressure, the water-level head of the liquid-phase refrigerant tends to have a great influence on the evaporation pressure in a flooded shell-and-tube heat exchanger. Therefore, when a refrigerant such as water is used, it is advantageous that the first evaporator 20a and the second evaporator 20b are each a spraying or sprinkling shell-and-tube heat exchanger.

The first supplier 23a and the second supplier 23b are each produced, for example, by pressing and welding a stainless steel plate.

The heat exchange unit 5 is charged with the refrigerant and the absorbent liquid. The refrigerant is, for example, a chlorofluorocarbon-based refrigerant such as hydrofluorocarbon (HFC) or a natural refrigerant such as water or ammonia. The absorbent liquid is, for example, an aqueous lithium bromide solution or an ionic fluid.

As shown in FIG. 1, the heat exchange unit 5 includes, for example, a shell 3. The shell 3 is configured as a container having thermal insulation properties and pressure resistance. A liquid-phase refrigerant and the absorbent liquid are stored inside the shell 3. The shell 3 isolates the vapor-phase refrigerant inside the shell 3 from the outside air such as air at atmospheric pressure.

As shown in FIG. 1, the heat exchange unit 5 includes an absorbent liquid supply path 17a, an absorbent liquid discharge path 17b, and an absorbent liquid pump 19.

The absorbent liquid supply path 17a is a path for leading the absorbent liquid from the outside of the absorber unit 1a to the inside of the absorber unit 1a. The absorbent liquid supply path 17a is formed of a pipe having thermal insulation properties and pressure resistance.

The absorbent liquid discharge path 17b is a path for leading the absorbent liquid from the inside of the absorber unit 1a to the outside of the absorber unit 1a. The absorbent liquid discharge path 17b is formed of a pipe having thermal insulation properties and pressure resistance.

The absorbent liquid pump 19 is, for example, a dynamic canned pump. By activating the absorbent liquid pump 19, the absorbent liquid stored in the absorber unit 1a is pumped to be discharged out of the absorber unit 1a through the absorbent liquid discharge path 17b.

As shown in FIG. 1, the heat exchange unit 5 includes a refrigerant supply path 26, a circulation path 27, and a refrigerant pump 28.

The refrigerant supply path 26 is a path for leading the liquid-phase refrigerant from the outside of the evaporator unit 2 to the inside of the evaporator unit 2. The refrigerant supply path 26 is formed of a pipe having thermal insulation properties and pressure resistance.

The circulation path 27 is a path for circulation of the liquid-phase refrigerant stored in the second evaporator 20b. The circulation path 27 leads, for example, the liquid-phase refrigerant stored in the second evaporator 20b to the first supplier 23a of the first evaporator 20a. The circulation path 27 is formed of a pipe having thermal insulation properties and pressure resistance.

The refrigerant pump 28 is, for example, a dynamic canned pump. By activating the refrigerant pump 28, the liquid-phase refrigerant stored in the second evaporator 20b is pumped to circulate through the circulation path 27.

As shown in FIG. 1, the heat exchange unit 5 includes a first eliminator 32a and a second eliminator 32b. The first eliminator 32a and the second eliminator 32b are each a gas-liquid separation system for reducing drops of the liquid-phase refrigerant in the evaporator unit 2, the drops carried to the absorber unit 1a by the flow of the vapor-phase refrigerant. The first eliminator 32a and the second eliminator 32b are each produced, for example, by pressing and welding a stainless steel plate. The first eliminator 32a is disposed, for example, in the first vapor flow path 31a. The second eliminator 32b is disposed, for example, in the second vapor flow path 31b.

### [1-2. Behavior]

A behavior and an action of the heat exchange unit 5 configured as described above will be described hereinafter.

The behavior of the heat exchange unit 5 will be described on the basis of FIG. 1 and FIG. 2. The internal temperature of the heat exchange unit 5 having been left in a room during a given period, such as the nighttime, is nearly equal to the room temperature and uniform. Additionally, the internal pressure of the heat exchange unit 5 is also uniform. For example, when the room temperature is 25°C, the internal temperature of the heat exchange unit 5 is almost 25°C and uniform.

When the heat exchange unit 5 is in operation, a heat medium, such as water, having absorbed heat from the outside of the heat exchange unit 5 flows inside the heat transfer tubes of the third heat transfer tube group 22a and the fourth heat transfer tube group 22b. This heat medium flows, for example, into the fourth heat transfer tube group 22b at 12°C. The heat medium having passed through the fourth heat transfer tube group 22b is led to the third heat transfer tube group 22a. A heat medium, such as water, having dissipated its heat to the outside of the heat exchange unit 5 flows inside the heat transfer tubes of the first heat transfer tube group 12a and the second heat transfer tube group 12b. This heat medium flows, for example, into the second heat transfer tube group 12b at 32°C. The heat medium having passed through the second heat transfer tube group 12b is led to the first heat transfer tube group 12a.

At the beginning of operation of the heat exchange unit 5, the absorbent liquid is supplied to the absorber unit 1a through the absorbent liquid supply path 17a. The temperature of the supplied absorbent liquid is about 50°C, and the concentration of the solute in the supplied absorbent liquid is about 63 mass%. The absorbent liquid supplied to the absorber unit 1a is stored in the first drip feed 13a, and is then dripped toward the first heat transfer tube group 12a. The dripped absorbent liquid flows down around the outer surfaces of the heat transfer tubes of the first heat transfer tube group 12a to absorb the vapor-phase refrigerant generated in the first evaporator 20a. Consequently, the concentration of the solute in the absorbent liquid decreases, and the absorbent liquid is stored in a bottom portion of the first space 16a, the bottom portion being in contact with the partition 14. Simultaneously, the liquid-phase refrigerant stored in the second evaporator 20b is pumped by the refrigerant pump 28 to be supplied to the first supplier 23a through the circulation path 27. The liquid-phase refrigerant supplied to the first supplier 23a is supplied toward the third heat transfer tube group 22a. The liquid-phase refrigerant flows down around the heat transfer tubes of the third heat transfer tube group 22a, forming a liquid film. As the liquid-phase refrigerant flows down, the liquid-phase refrigerant deprives the heat medium flowing in the heat transfer tubes of the third heat transfer tube group 22a of the heat thereof to evaporate. An unevaporated portion of the liquid-phase refrigerant is stored in the second supplier 23b.

While being flowing down around the outer surfaces of the heat transfer tubes of the first heat transfer tube group 12a, the absorbent liquid absorbs the vapor-phase refrigerant from the first evaporator 20a. The absorption of the vapor-phase refrigerant increases the temperature of the absorbent liquid. However, simultaneously, the absorbent liquid is cooled by the heat medium flowing inside the heat transfer tubes of the first heat transfer tube group 12a, and thus supercooling and absorption occur constantly. The constant supercooling and absorption decrease the pressure in a low-pressure stage including the first evaporator 20a and the first absorber 10a in the heat exchange unit 5. Consequently, the liquid-phase refrigerant flowing down around the outer surfaces of the heat transfer tubes of the third heat transfer tube group 22a evaporates. The evaporation of the liquid-phase refrigerant decreases the temperature of the liquid-phase refrigerant. However, simultaneously, the heat medium flowing inside the heat transfer tubes of the third heat transfer tube group 22a heats the liquid-phase refrigerant, and thus evaporation of the liquid-phase refrigerant occurs constantly.

Next, the absorbent liquid having flown down the outer surfaces of the heat transfer tubes of the first heat transfer tube group 12a flows into the supply path 15 through the inlet 15a. In the upstream portion 15c, the absorbent liquid is led from the inlet 15a with gravity. In the downstream portion 15d, the absorbent liquid having passed through the upstream portion 15c is led toward the outlet 15b against gravity. In this manner, as shown in FIG. 2, the absorbent liquid can form a liquid seal in the supply path 15. The absorbent liquid is supplied to the second drip feed 13b through the downstream portion 15d and the outlet 15b and is stored therein.

The temperature of the absorbent liquid stored in the second drip feed 13b is about 44°C, and the concentration of the solute in the absorbent liquid is about 59 mass%. The absorbent liquid stored in the second drip feed 13b is dripped toward the second heat transfer tube group 12b. The dripped absorbent liquid absorbs the vapor-phase refrigerant generated in the second evaporator 20b while flowing down around the outer surfaces of the heat transfer tubes of the second heat transfer tube group 12b. Consequently, the concentration of the solute in the absorbent liquid decreases, and the absorbent liquid is stored in a lower portion of the second space 16b. The absorbent liquid stored in the lower portion of the second space 16b is pumped by the absorbent liquid pump 19 to go through the absorbent liquid discharge path 17b and then be discharged from the absorber unit 1a. The temperature of the absorbent liquid to be discharged is about 37°C, and the concentration of the solute in the absorbent liquid to be discharged is about 55 mass%. Simultaneously, the liquid-phase refrigerant stored in the second supplier 23b is supplied toward the fourth heat transfer tube group 22b. The liquid-phase refrigerant flows down around the heat transfer tubes of the fourth heat transfer tube group 22b, forming a liquid film. The liquid-phase refrigerant deprives the heat medium flowing inside the heat transfer tubes of the fourth heat transfer tube group 22b of the heat thereof to evaporate while being flowing down around the outer surfaces of the heat transfer tubes of the fourth heat transfer tube group 22b. An unevaporated portion of the liquid-phase refrigerant is stored below the fourth heat transfer tube group 22b in the shell 3.

While being flowing down around the outer surfaces of the heat transfer tubes of the second heat transfer tube group 12b, the absorbent liquid absorbs the vapor-phase refrigerant from the second evaporator 20b. The absorption of the vapor-phase refrigerant increases the temperature of the absorbent liquid. However, simultaneously, the absorbent liquid is cooled by the heat medium flowing inside the heat transfer tubes of the second heat transfer tube group 12b, and thus supercooling and absorption occur constantly. The constant supercooling and absorption decrease the pressure in a high-pressure stage including the second evaporator 20b and the second absorber 10b. Consequently, the liquid-phase refrigerant flowing down around the outer surfaces of the heat transfer tubes of the fourth heat transfer tube group 22b evaporates. The evaporation of the liquid-phase refrigerant decreases the temperature of the liquid-phase refrigerant. However, simultaneously, the liquid-phase refrigerant is heated by the heat medium flowing inside the heat transfer tubes of the second heat transfer tube group 12b, and thus evaporation of the liquid-phase refrigerant occurs constantly.

In this manner, the pressures in the high-pressure stage and the low-pressure stage of the heat exchange unit 5 are each maintained at a given pressure, and thus the heat exchange unit 5 is in a steady state.

In a steady state in rated operation of the heat exchange unit 5, the heat medium flowing inside the heat transfer tubes of the fourth heat transfer tube group 22b is cooled from 12°C to about 9.75°C. Additionally, the heat medium flowing inside the heat transfer tubes of the third heat transfer tube group 22a is cooled from 9.75°C to about 7°C. Accordingly, the temperature of the liquid-phase refrigerant stored in the second evaporator 20b is about 7.6°C, and the pressure of the vapor-phase refrigerant inside the second evaporator 20b is about 1044 Pa, which is the saturated vapor pressure of the liquid-phase refrigerant at about 7.6°C. The temperature of the liquid-phase refrigerant stored in the first evaporator 20a is about 6.1°C, and the pressure of the vapor-phase refrigerant inside the first evaporator 20a is about 942 Pa, which is the saturated vapor pressure of the liquid-phase refrigerant at about 6.1°C. Therefore, the difference between the pressures in the high-pressure stage including the second evaporator 20b and the second absorber 10b and the low-pressure stage including the first evaporator 20a and the first absorber 10a is about 100 Pa.

In the steady state in rated operation, the heat medium flowing inside the heat transfer tubes of the second heat transfer tube group 12b is heated from 32°C to about 34.25°C, and the heat medium flowing inside the heat transfer tubes of the first heat transfer tube group 12a is heated from about 34.25°C to about 36.5°C. The temperature of the absorbent liquid stored in the first drip feed 13a and dripped toward the first heat transfer tube group 12a is 50°C, and the density thereof is about 1750 kg/m³. The temperature of the absorbent liquid supplied toward the second drip feed 13b through the supply path 15 is 44°C, and the density thereof is about 1680 kg/m³. The temperature of the absorbent liquid stored in the lower portion of the second space 16b is 37°C, and the density thereof is about 1610 kg/m³.

Meanwhile, in a steady state in low load operation such as 25% load operation, the heat medium flowing inside the heat transfer tubes of the fourth heat transfer tube group 22b is cooled from 8.4°C to about 7.7°C. Additionally, the heat medium flowing inside the heat transfer tubes of the third heat transfer tube group 22a is cooled from about 7.7°C to about 7°C. Accordingly, the temperature of the liquid-phase refrigerant stored inside the second evaporator 20b is about 6.4°C, and the pressure of the vapor-phase refrigerant inside the second evaporator 20b is about 963 Pa, which is the saturated vapor pressure of the liquid-phase refrigerant at about 6.4°C. The temperature of the liquid-phase refrigerant stored inside the first evaporator 20a is about 6.1°C, and the pressure of the vapor-phase refrigerant inside the first evaporator 20a is about 942 Pa, which is the saturated vapor pressure of the liquid-phase refrigerant at about 6.1°C. Therefore, the difference between the pressures in the high-pressure stage including the second evaporator 20b and the second absorber 10b and the low-pressure stage including the first evaporator 20a and the first absorber 10a is about 21 Pa.

For example, in the steady state in 25% load operation, the heat medium flowing inside the heat transfer tubes of the second heat transfer tube group 12b is heated from 18°C to about 18.6°C. Additionally, the heat medium flowing inside the heat transfer tubes of the first heat transfer tube group 12a is heated from 18.6°C to about 19.1°C. The temperature of the absorbent liquid stored in the first drip feed 13a and dripped toward the first heat transfer tube group 12a is about 28°C, and the density thereof is about 1500 kg/m³. The temperature of the absorbent liquid supplied toward the second drip feed 13b through the supply path 15 is 21°C, and the density thereof is about 1460 kg/m³. The temperature of the absorbent liquid stored in the lower portion of the second space 16b is 18°C, and the density thereof is about 1420 kg/m³.

In FIG. 2, in the supply path 15 in the steady state in rated operation, a head h1 of the absorbent liquid is about 6 mm, and a head h2 of the absorbent liquid is about 11.6 mm, the head h1 being required to maintain the difference between the pressures in the high-pressure stage and the low-pressure stage, the head h2 being required to let the absorbent liquid flow. As shown in FIG. 2, in the upstream portion 15c, for example, the liquid level of the absorbent liquid can fluctuate in a fluctuation range tb of 2 mm. The rate of the absorbent liquid passing through the hole 13h of the second drip feed 13b is about 0.4 m/sec. A head h3 of the absorbent liquid inside the second drip feed 13b is about 7.6 mm.

In the supply path 15, for example, in the steady state in 25% load operation, the head h1 of the absorbent liquid required to maintain the difference between the pressures in the high-pressure stage and the low-pressure stage is about 1.5 mm, and the head h2 required to let the absorbent liquid flow is about 2.3 mm. In the upstream portion 15c, for example, the liquid level of the absorbent liquid can fluctuate in a fluctuation range tb of 2 mm. The rate of the absorbent liquid passing through the hole 13h of the second drip feed 13b is about 0.1 m/sec. The head h3 of the absorbent liquid inside the second drip feed 13b is about 0.5 mm.

### [1-3. Effect, etc.]

As described above, in the present embodiment, the absorber unit 1a includes the first heat transfer tube group 12a, the first drip feed 13a, the second heat transfer tube group 12b, the second drip feed 13b, the partition 14, and the supply path 15. The first drip feed 13a is capable of dripping the absorbent liquid toward the first heat transfer tube group 12a. The second heat transfer tube group 12b is disposed below the first heat transfer tube group 12a in the gravity direction. The second drip feed 13b is capable of dripping, toward the second heat transfer tube group 12b, the absorbent liquid having been dripped from the first drip feed 13a and flown down an outer surface of the heat transfer tube of the first heat transfer tube group 12a. The partition 14 separates the first space 16a in which the first heat transfer tube group 12a is disposed and the second space 16b in which the second heat transfer tube group 12b is disposed. The supply path 15 is provided to the partition 14, and is capable of leading, into the second drip feed 13b, the absorbent liquid having flown down the outer surface of the heat transfer tube of the first heat transfer tube group 12a. The supply path 15 includes the inlet 15a in contact with the first space 16a and the outlet 15b disposed below the inlet 15a in the gravity direction, the outlet 15b being in contact with the second space 16b. The supply path 15 includes the upstream portion 15c in which the absorbent liquid is led from the inlet 15a with gravity and the downstream portion 15d in which the absorbent liquid having passed through the upstream portion 15c is led toward the outlet 15b against gravity.

Hence, even when the liquid level of the absorbent liquid in the supply path 15 fluctuates due to the absorbent liquid having flown down the outer surface of the heat transfer tube of the first heat transfer tube group 12a, the absorbent liquid forms a liquid seal in the supply path 15. This makes it less likely that the vapor-phase refrigerant in the second space 16b moves from the second space 16b into the first space 16a and that the mist of the absorbent liquid in the first space 16a spreads into the first evaporator 10a. Therefore, deterioration in refrigeration capacity in consequence of mixing of the absorbent liquid into the liquid-phase refrigerant is likely to be prevented.

As in the present embodiment, the downstream portion 15d may be positioned below the outlet 15b in the gravity direction. In this case, the supply path 15 can be simplified. The downstream portion 15d may be positioned above the outlet 15b in the gravity direction.

As in the present embodiment, the heat exchange unit 5 may include the absorber unit 1a, the first evaporator 20a, and the second evaporator 20b. The second evaporator 20b generates the vapor-phase refrigerant at a pressure higher than the pressure in the first evaporator 20a. The absorbent liquid dripped toward the first heat transfer tube group 12a absorbs the vapor-phase refrigerant generated in the first evaporator 20a. The absorbent liquid dripped toward the second heat transfer tube group 12b absorbs the vapor-phase refrigerant generated in the second evaporator 20b. Hence, a refrigerator including the heat exchange unit 5 is likely to exhibit a high COP.

### (Embodiment 2)

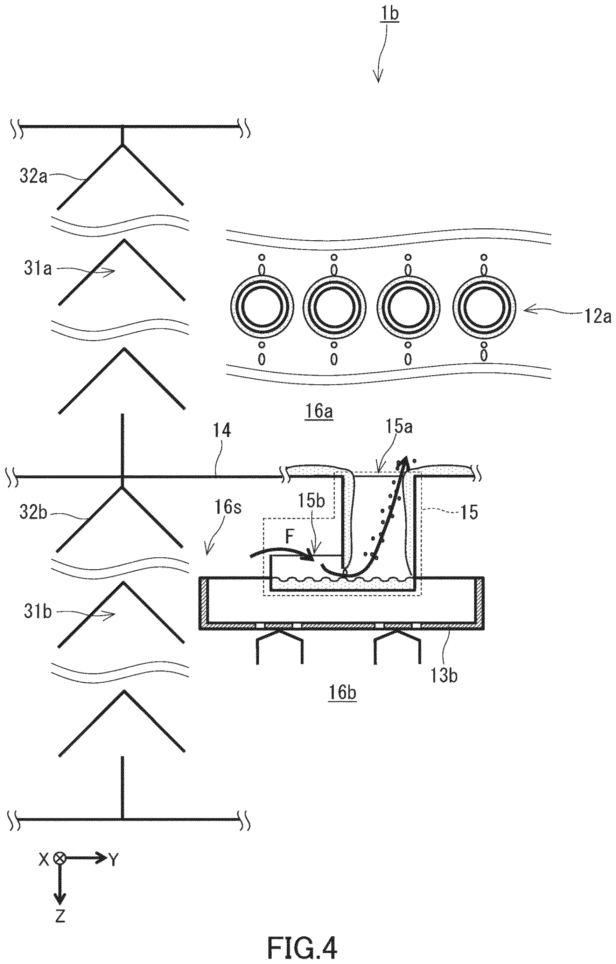

Embodiment 2 will be described hereinafter with reference to FIG. 4.

### [2-1. Configuration]

FIG. 4 is a schematic view of an absorber unit 1b according to Embodiment 2. The absorber unit 1b is configured in the same manner as the absorber unit 1a, unless otherwise described. The components of the absorber unit 1b that are the same as or correspond to those of the absorber unit 1a are denoted by the same reference characters, and detailed descriptions of such components are omitted. The description given for the absorber unit 1a can apply to the absorber unit 1b, unless there is technical inconsistency.

As shown in FIG. 4, the second space 16b includes a side portion 16s in contact with the flow path of the vapor-phase refrigerant. For example, the side portion 16s is in contact with the second vapor flow path 31b. In the absorber unit 1b, the outlet 15b of the supply path 15 is positioned closer to the side portion 16s than the inlet 15a is in a direction perpendicular to the gravity direction. The outlet 15b is positioned, for example, closer to the side portion 16s than the inlet 15a is in a direction perpendicular to the gravity direction and perpendicular to the longitudinal direction of the heat transfer tube of the second heat transfer tube group 12b.

### [2-2. Behavior]

A behavior and an action of the absorber unit 1b configured as described above will be described hereinafter. A behavior of a heat exchange unit including the absorber unit 1b will be described on the basis of FIG. 4. This heat exchange unit is configured in the same manner as the heat exchange unit 5, except that the absorber unit 1b is included instead of the absorber unit 1a.

In start-up operation of the heat exchange unit including the absorber unit 1b, the absorbent liquid supplied to the first heat transfer tube group 12a absorbs the vapor-phase refrigerant having been led from the first evaporator 20a to the first space 16a while dissipating its heat to the heat medium flowing inside the heat transfer tube. Thus, the concentration of the solute in the absorbent liquid decreases. Simultaneously, the liquid-phase refrigerant supplied to the third heat transfer tube group 22a absorbs the heat from the heat medium flowing inside the heat transfer tubes to evaporate, decreasing its temperature. Consequently, the pressure in the low-pressure stage including the first evaporator 20a and the first absorber 10a decreases. Meanwhile, the absorbent liquid having flown down the outer surface of the heat transfer tube of the first heat transfer tube group 12a is led from the inlet 15a to the supply path 15. In this case, the pressure in the high-pressure stage including the second evaporator 20b and the second absorber 10b is high because evaporation of the liquid-phase refrigerant and absorption of the vapor-phase refrigerant by the absorbent liquid have not started yet in the high-pressure stage. For example, the pressure in the low-pressure stage can be about 940 Pa, and the pressure in the high-pressure stage can be about 1150 Pa. The difference between the pressures in the high-pressure stage including the second evaporator 20b and the second absorber 10b and the low-pressure stage including the first evaporator 20a and the first absorber 10a can be about 210 Pa, which is larger than that in rated operation, namely, about 100 Pa.

### [2-3. Effect, etc.]

As described above, in the present embodiment, the second space 16b includes the side portion 16s in contact with the flow path of the vapor-phase refrigerant. Moreover, the outlet 15b is positioned closer to the side portion 16s than the inlet 15a is in a direction perpendicular to the gravity direction.

This makes it difficult for the mist of the absorbent liquid to spread into the first evaporator 20a, for example, under operation conditions for start-up operation where the amount of the absorbent liquid in the supply path 15 is insufficient for liquid seal formation and the difference between the pressures in the high-pressure stage and the low-pressure stage is large. This is because, even in the case where a portion of the vapor-phase refrigerant in the high-pressure stage moves into the first space 16a through the supply path 15, the vapor-phase refrigerant in the high-pressure stage is likely to pass through the outlet 15b and the inlet 15a and goes into the first space 16a away from the first evaporator 20a. Therefore, deterioration in refrigeration capacity in consequence of mixing of the absorbent liquid into the liquid-phase refrigerant is likely to be prevented.

### (Embodiment 3)

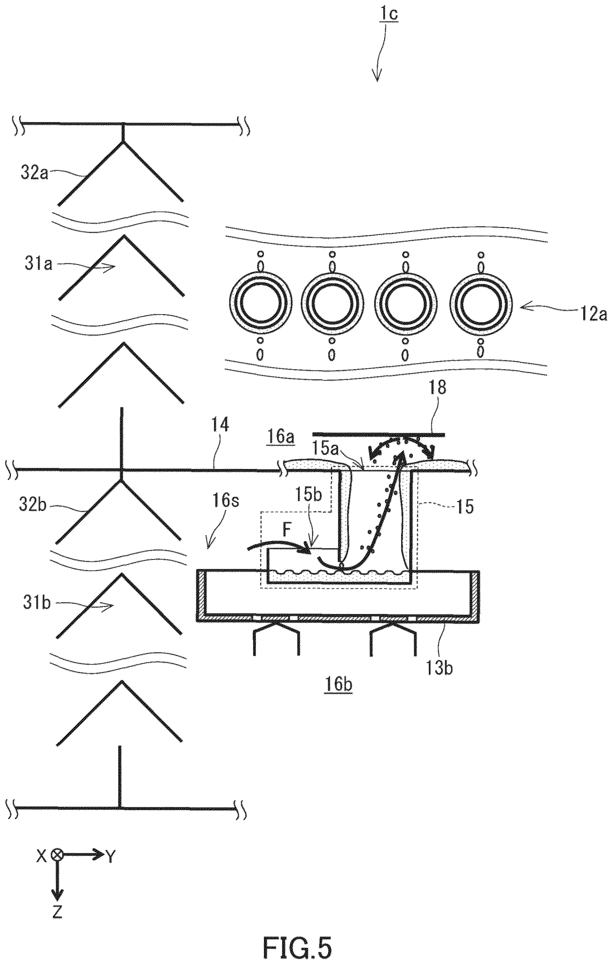

Embodiment 3 will be described hereinafter with reference to FIG. 5.

### [3-1. Configuration]

FIG. 5 is a schematic view of an absorber unit 1c according to Embodiment 3. The absorber unit 1c is configured in the same manner as the absorber unit 1b, unless otherwise described. The components of the absorber unit 1c that are the same as or correspond to those of the absorber unit 1b are denoted by the same reference characters, and detailed descriptions of such components are omitted. The descriptions given for the absorber units 1a and 1b can apply to the absorber unit 1c, unless there is technical inconsistency.

As shown in FIG. 5, the absorber unit 1c further includes a cover 18. The cover 18 is disposed between the first heat transfer tube group 12a and the inlet 15a in the gravity direction and covers the inlet 15a.

### [3-2. Behavior]

A behavior and an action of the absorber unit 1c configured as described above will be described hereinafter. A behavior of a heat exchange unit including the absorber unit 1c will be described on the basis of FIG. 5. This heat exchange unit is configured in the same manner as the heat exchange unit 5, except that the absorber unit 1c is included instead of the absorber unit 1a.

The heat exchange unit including the absorber unit 1c can be started up, for example, under conditions where the ambient temperature is high and the difference between the pressures in the high-pressure stage and the low-pressure stage is larger. For example, the heat exchange unit including the absorber unit 1c can be started up under conditions where the ambient temperature is about 30°C, the pressure in the high-pressure stage is about 940 Pa, and the pressure in the low-pressure stage is about 1350 Pa. In this case, the difference between the pressures in the high-pressure stage including the second evaporator 20b and the second absorber 10b and the low-pressure stage including the first evaporator 20a and the first absorber 10a can be about 410 Pa, which is larger than that in rated operation, namely, about 100 Pa.

### [3-3. Effect, etc.]

As described above, in the present embodiment, the absorber unit 1c further includes the cover 18. The cover 18 is disposed between the first heat transfer tube group 12a and the inlet 15a in the gravity direction and covers the inlet 15a.

This makes it difficult for the mist of the absorbent liquid to spread into the first evaporator 20a even under conditions, such as startup at a high ambient temperature, where the amount of the absorbent liquid in the supply path 15 is insufficient for liquid seal formation. This is because, even in the case where the vapor-phase refrigerant in the high-pressure stage moves into the first space 16a through the supply path 15, the mist of the absorbent liquid tends to adhere to the cover 18 or tends to bounce off the cover 18 and fall down. Therefore, deterioration in refrigeration capacity in consequence of mixing of the absorbent liquid into the liquid-phase refrigerant is likely to be prevented.

### (Embodiment 4)

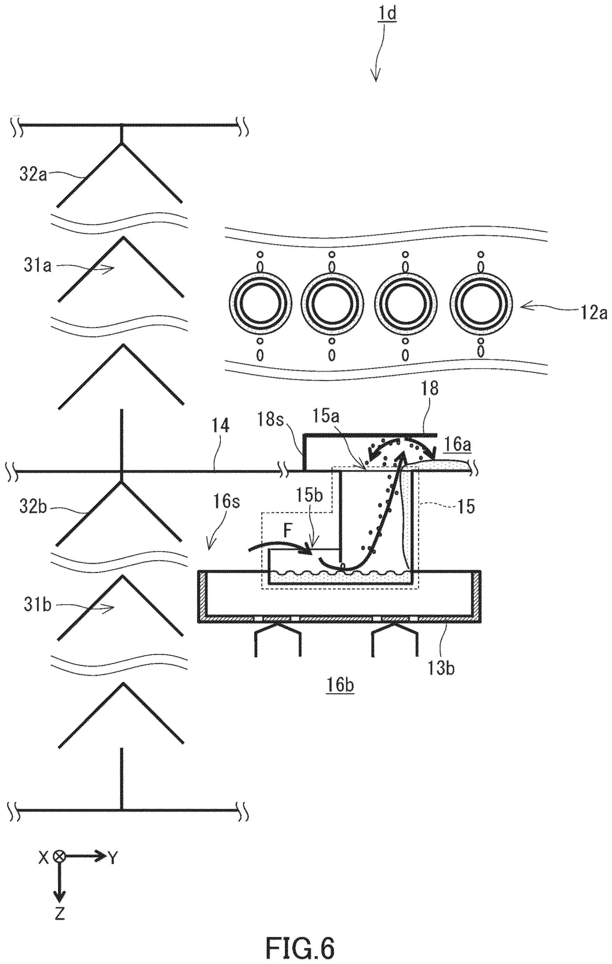

Embodiment 4 will be described hereinafter with reference to FIG. 6.

### [4-1. Configuration]

FIG. 6 is a schematic view of an absorber unit 1d according to Embodiment 4. The absorber unit 1d is configured in the same manner as the absorber unit 1c, unless otherwise described. The components of the absorber unit 1d that are the same as or correspond to those of the absorber unit 1c are denoted by the same reference characters, and detailed descriptions of such components are omitted. The descriptions given for the absorber units 1a, 1b, and 1c can apply to the absorber unit 1d, unless there is technical inconsistency.

As shown in FIG. 6, in the absorber unit 1d, the cover 18 is disposed between the first heat transfer tube group 12a and the inlet 15a in the gravity direction and covers the inlet 15a. Moreover, the cover 18 has a side wall 18s. The side wall 18s is disposed closer to the flow path of the vapor-phase refrigerant than the inlet 15a is in a direction perpendicular to the gravity direction. For example, the side wall 18s is disposed closer to the first vapor flow path 31a than the inlet 15a is in a direction perpendicular to the gravity direction and perpendicular to the longitudinal direction of the heat transfer tube of the first heat transfer tube group 12a.

### [4-2. Behavior]

A behavior and an action of the absorber unit 1d configured as described above will be described hereinafter. A behavior of a heat exchange unit including the absorber unit 1d will be described on the basis of FIG. 6. This heat exchange unit is configured in the same manner as the heat exchange unit 5, except that the absorber unit 1d is included instead of the absorber unit 1a.

The heat exchange unit including the absorber unit 1d can be started up, for example, under conditions where the ambient temperature is high and the difference between the pressures in the high-pressure stage and the low-pressure stage is larger. For example, the heat exchange unit including the absorber unit 1d can be started up under conditions where the ambient temperature is about 30°C, the pressure in the high-pressure stage is about 940 Pa, and the pressure in the low-pressure stage is about 1350 Pa. In this case, the difference between the pressures in the high-pressure stage including the second evaporator 20b and the second absorber 10b and the low-pressure stage including the first evaporator 20a and the first absorber 10a can be about 410 Pa, which is larger than that in rated operation, namely, about 100 Pa.

### [4-3. Effect, etc.]

As described above, in the present embodiment, the absorber unit 1d further includes the cover 18. The cover 18 is disposed between the first heat transfer tube group 12a and the inlet 15a in the gravity direction and covers the inlet 15a. Moreover, the cover 18 has the side wall 18s. The side wall 18s is disposed closer to the flow path of the vapor-phase refrigerant than the inlet 15a is in a direction perpendicular to the gravity direction.

This makes it difficult for the mist of the absorbent liquid to spread into the first evaporator 20a even under conditions, such as startup at a high ambient temperature, where the amount of the absorbent liquid in the supply path 15 is insufficient for liquid seal formation. This is because, even in the case where the vapor-phase refrigerant in the high-pressure stage moves into the first space 16a through the supply path 15, the mist of the absorbent liquid is likely to be blocked by the side wall 18s and is thus less likely to be led to the first evaporator 20a. Therefore, deterioration in refrigeration capacity in consequence of mixing of the absorbent liquid into the liquid-phase refrigerant is likely to be prevented.

### (Embodiment 5)

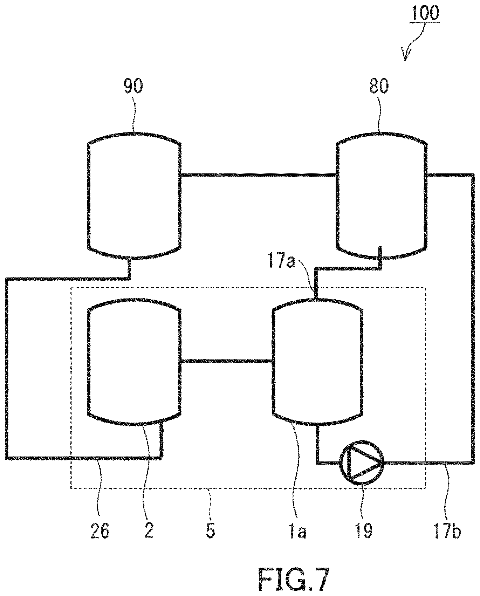

Embodiment 5 will be described hereinafter with reference to FIG. 7.

### [5-1. Configuration]

As shown in FIG. 7, an absorption refrigerator 100 includes, for example, the heat exchange unit 5. The absorption refrigerator 100 further includes, for example, a regenerator 80 and a condenser 90. The absorption refrigerator 100 is, for example, an absorption refrigerator of the single-effect cycle. The absorption refrigerator 100 may be an absorption refrigerator of the double-effect cycle or the triple-effect cycle. In the case where a gas burner is used as a heat source for the regenerator 80, the absorption refrigerator 100 can be a gas chiller.

### [5-2. Behavior]

A behavior and an action of the absorption refrigerator 100 configured as described above will be described hereinafter. The absorbent liquid stored in the absorber unit 1a is led to the regenerator 80 through the absorbent liquid discharge path 17b. In the regenerator 80, the concentration of the solute in the absorbent liquid is increased by heating. The absorbent liquid with an increased solute concentration is led to the absorber unit 1a through the absorbent liquid supply path 17a. Meanwhile, the heating of the absorbent liquid in the regenerator 80 generates a vapor-phase refrigerant. The vapor-phase refrigerant is led to the condenser 90, and is condensed in the condenser 90 by cooling. Thus, a liquid-phase refrigerant is generated. After reduced in pressure, the liquid-phase refrigerant is, for example, led to the evaporator unit 2 through the refrigerant supply path 26. It should be noted that the absorber unit of the absorption refrigerator 100 may be the absorber unit 1b, the absorber unit 1c, or the absorber unit 1d.

### [5-3. Effect]

As described above, in the present embodiment, the absorption refrigerator 100 includes the heat exchange unit 5. Because of this, in the absorption refrigerator 100, deterioration in refrigeration capacity in consequence of mixing of the absorbent liquid into the liquid-phase refrigerant is likely to be prevented.

Embodiments 1, 2, 3, 4, and 5 have been described above as examples of the technique disclosed in the present application. However, the technique according to the present disclosure is not limited to these, and is applicable to embodiments with modifications, replacements, additions, omissions, and the like. For example, the inlet 15a may be positioned closer to the side portion 16s than the outlet 15b is in a direction perpendicular to the gravity direction.

### INDUSTRIAL APPLICABILITY

The present disclosure is applicable to absorption refrigerators that are adapted to central air conditioners for buildings, chillers for process cooling, and the like.

## Claims

1. An absorber unit comprising:
a first heat transfer tube group including a plurality of heat transfer tubes;
a first drip feed capable of dripping an absorbent liquid toward the first heat transfer tube group;
a second heat transfer tube group disposed below the first heat transfer tube group in a gravity direction;
a second drip feed capable of dripping, toward the second heat transfer tube group, the absorbent liquid having been dripped from the first drip feed and flown down an outer surface of the heat transfer tube of the first heat transfer tube group;
a partition separating a first space in which the first heat transfer tube group is disposed and a second space in which the second heat transfer tube group is disposed; and
a supply path provided to the partition, the supply path being capable of leading, into the second drip feed, the absorbent liquid having flown down the outer surface of the heat transfer tube of the first heat transfer tube group, wherein
the supply path comprises: an inlet in contact with the first space; an outlet disposed below the inlet in the gravity direction, the outlet being in contact with the second space; an upstream portion in which the absorbent liquid is led from the inlet with gravity; and a downstream portion in which the absorbent liquid having passed through the upstream portion is led toward the outlet against gravity.

2. The absorber unit according to claim 1, wherein the downstream portion is positioned below the outlet in the gravity direction.

3. The absorber unit according to claim 1 or 2, wherein
the second space comprises a side portion in contact with a flow path of a vapor-phase refrigerant, and
the outlet is positioned closer to the side portion than the inlet is in a direction perpendicular to the gravity direction.

4. The absorber unit according to any one of claims 1 to 3, further comprising a cover disposed between the first heat transfer tube group and the inlet in the gravity direction, the cover covering the inlet.

5. A heat exchange unit comprising:
the absorber unit according to any one of claims 1 to 4;
a first evaporator; and
a second evaporator capable of generating a vapor-phase refrigerant at a pressure higher than a pressure in the first evaporator, wherein
the absorbent liquid dripped toward the first heat transfer tube group absorbs a vapor-phase refrigerant generated in the first evaporator, and
the absorbent liquid dripped toward the second heat transfer tube group absorbs the vapor-phase refrigerant generated in the second evaporator.

6. An absorption refrigerator comprising the heat exchange unit according to claim 5.
